# EUROPEAN PATENT APPLICATION

(11) **EP 4 496 404 A1**
(43) Date of publication of application: **22.01.2025**
(21) Application number: 22932065.0
(22) Date of filing: 16.03.2022
(51) Int. Cl.: H04W 72/04, H04W 72/12

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); SUN, Weiqi, Beijing 100190 (CN); CHEN, Lan, Beijing 100190 (CN)
(74) Representative: Hoffmann Eitle
(86) International application number: PCT/JP2022/011983
(87) International publication number: WO 2023/175786

(57) **Abstract**

A terminal according to one aspect of the present disclosure includes a receiving section that receives first configuration information related to a beta offset for a physical uplink shared channel for one codeword and second configuration information related to the beta offset for the physical uplink shared channel for two codewords, and a control section that determines the beta offset for transmission of the physical uplink shared channel for the two codewords, based on the second configuration information. According to one aspect of the present disclosure, UCI on PUSCH transmission for a plurality of codewords can be appropriately performed.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In NR, a terminal (a user terminal, a User Equipment (UE)) can transmit uplink control information (UCI), using a physical uplink shared channel (PUSCH). Operation of transmitting the UCI on the PUSCH is also referred to as UCI on PUSCH.

In a case of the UCI on PUSCH, the UE determines the amount of resources (for example, the number of coded modulation symbols for each layer) for transmission of the UCI, based on a beta offset. A set related to a plurality of beta offsets may be configured for the UE, using higher layer signaling (for example, RRC (Radio Resource Control) signaling).

In Rel-15/16 NR, the UE transmits one codeword (CW) using one PUSCH. In future radio communication systems (for example, Rel-17 NR), it is under study that the UE transmits more than one CW using one PUSCH.

However, a study has not yet been carried out on how to perform a configuration of the beta offset related to the PUSCH for transmitting more than one CW. Unless UCI on PUSCH transmission for a plurality of CWs is appropriately performed, throughput may be reduced and communication quality may be reduced.

In view of this, the present disclosure has one object to provide a terminal, a radio communication method, and a base station with which UCI on PUSCH transmission for a plurality of codewords can be appropriately performed. Solution to Problem

A terminal according to one aspect of the present disclosure includes a receiving section that receives first configuration information related to a beta offset for a physical uplink shared channel for one codeword and second configuration information related to the beta offset for the physical uplink shared channel for two codewords, and a control section that determines the beta offset for transmission of the physical uplink shared channel for the two codewords, based on the second configuration information.

### Advantageous Effects of Invention

According to one aspect of the present disclosure, UCI on PUSCH transmission for a plurality of codewords can be appropriately performed.

### Brief Description of Drawings

[FIG. 1] FIG. 1 is a diagram to show an example of information elements of a set related to a plurality of beta offsets in Rel-15/16 NR.
[FIG. 2] FIG. 2 is a diagram to show an example of PUSCH configuration information including beta offsets information elements in Rel-15/16 NR.
[FIG. 3] FIG. 3 is a diagram to show an example of CG PUSCH configuration information including the beta offsets information elements in Rel-15/16 NR.
[FIG. 4] FIG. 4 is a diagram to show an example of a UCI-OnPUSCH information element for UCI on 1 CW PUSCH and a UCI-OnPUSCH information element for UCI on 2 CW PUSCH regarding a dynamic PUSCH of a first embodiment.
[FIG. 5] FIG. 5 is a diagram to show an example of a betaOffsets parameter and a scaling parameter for the UCI on 1 CW PUSCH and a betaOffsets parameter and a scaling parameter for the UCI on 2 CW PUSCH regarding the dynamic PUSCH of the first embodiment.
[FIG. 6] FIG. 6 is a diagram to show an example of the UCI-OnPUSCH information element for the UCI on 1 CW PUSCH and the UCI on 2 CW PUSCH regarding the dynamic PUSCH of the first embodiment.
[FIG. 7] FIG. 7 is a diagram to show an example of a betaOffsets parameter and a scaling parameter for the UCI on 1 CW PUSCH and a betaOffsets parameter and a scaling parameter for the UCI on 2 CW PUSCH regarding the dynamic PUSCH of a second embodiment.
[FIG. 8] FIG. 8 is a diagram to show an example of a CG-UCI-OnPUSCH information element for the UCI on 1 CW PUSCH and a CG-UCI-OnPUSCH information element for the UCI on 2 CW PUSCH regarding a CG PUSCH of a third embodiment.
[FIG. 9] FIG. 9 is a diagram to show an example of the CG-UCI-OnPUSCH information element for the UCI on 1 CW PUSCH and the UCI on 2 CW PUSCH regarding the CG PUSCH of the third embodiment.
[FIG. 10] FIG. 10 is a diagram to show an example of a schematic structure of a radio communication system according to one embodiment.
[FIG. 11] FIG. 11 is a diagram to show an example of a structure of a base station according to one embodiment.
[FIG. 12] FIG. 12 is a diagram to show an example of a structure of a user terminal according to one embodiment.
[FIG. 13] FIG. 13 is a diagram to show an example of a hardware structure of the base station and the user terminal according to one embodiment.
[FIG. 14] FIG. 14 is a diagram to show an example of a vehicle according to one embodiment.

### Description of Embodiments

### (Beta Offset)

In NR, a UE can transmit uplink control information (UCI), using a physical uplink shared channel (PUSCH). Operation of transmitting the UCI on the PUSCH is also referred to as UCI on PUSCH.

In a case of the UCI on PUSCH, the UE may determine a coding rate of the UCI to be transmitted using the PUSCH, based on the amount of resources (for example, the number of coded modulation symbols for each layer, the number of resource elements (REs)) used for transmission of the UCI, the number of bits of the UCI, a modulation order, or the like.

The UE determines the amount of resources (for example, the number of coded modulation symbols for each layer) for transmission of the UCI, based on a beta offset. The beta offset is also expressed as β_{Offset} or the like, and may be different for each type or content (HARQ-ACK, CSI part 1, CSI part 2, or the like) of the UCI. Based on the beta offset, transmission power of the PUSCH including the UCI may be determined.

A set related to a plurality of beta offsets may be configured for the UE, using higher layer signaling (for example, RRC (Radio Resource Control) signaling).

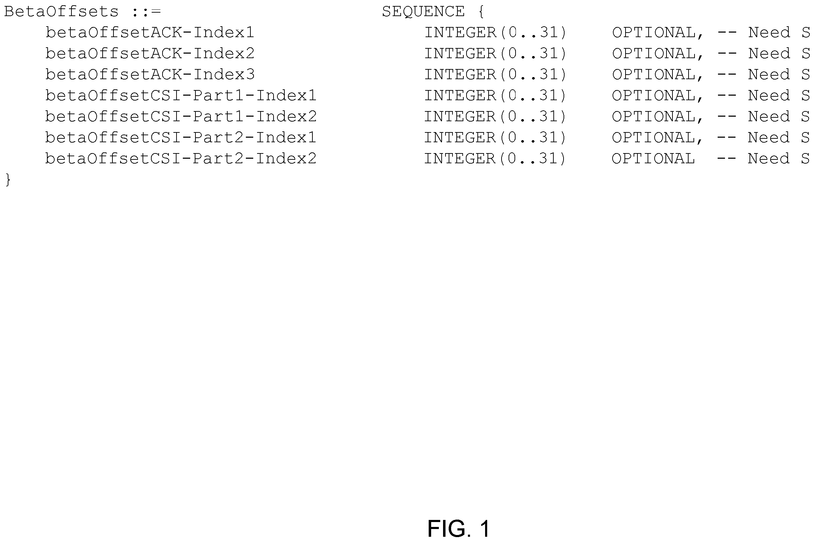

FIG. 1 is a diagram to show an example of information elements of the set related to a plurality of beta offsets in Rel-15/16 NR. The present example is described using Abstract Syntax Notation One (ASN.1) notation (note that this is merely an example and may not be a complete description; the same holds true for the following similar drawings).

The information elements (beta offsets information elements (BetaOffsets IEs)) of the set related to a plurality of beta offsets include seven parameters indicating indexes related to the beta offsets.

Parameters betaOffsetACK-Index1, betaOffsetACK-Index2, and betaOffsetACK-Index3 indicate indexes related to the beta offsets applied in transmission of the HARQ-ACK having up to 2 bits, up to 11 bits, and more than 11 bits on the PUSCH, respectively.

Parameters betaOffsetCSI-Part1-Index1 and betaOffsetCSI-Part1-Index2 indicate indexes related to the beta offsets applied in transmission of the CSI part 1 having up to 11 bits and more than 11 bits on the PUSCH, respectively.

Parameters betaOffsetCSI-Part2-Index1 and betaOffsetCSI-Part2-Index2 indicate indexes related to the beta offsets applied in transmission of the CSI part 2 having up to 11 bits and more than 11 bits on the PUSCH, respectively.

The UE refers to one index in one set and determines a corresponding beta offset value, based on the type (or the content) and the number of bits (payload size) of the UCI to be transmitted. Note that correspondence between the indexes and the beta offset values is defined in a standard. The correspondence may be different for each content of the UCI.

In NR, a dynamic beta offset and a semi-static beta offset are defined. When the UE is configured with the dynamic beta offset, the UE is indicated with one out of up to four offset indexes by a beta offset indicator field included in a downlink control information (DCI) format for scheduling the PUSCH. The UE uses a beta offsets information element corresponding to the indicated offset index for determination of the beta offset for the UCI to be transmitted on the PUSCH.

When the UE is configured with the semi-static beta offset, the UE determines that the beta offset indicator field included in the DCI format for scheduling the PUSCH has 0 bits. The UE uses one beta offsets information element configured by RRC for determination of the beta offset for the UCI to be transmitted on the PUSCH.

The beta offsets information element related to the dynamic beta offset or the semi-static beta offset regarding the PUSCH scheduled using a DCI format (which may be referred to as a dynamic PUSCH, a dynamic scheduling PUSCH, or the like) is configured for the UE by being included in PUSCH configuration information (PUSCH-Config information element). Note that the DCI for scheduling the PUSCH may be referred to as a dynamic grant, and for example, DCI formats 0_0, 0_1, and 0_2 and the like are defined.

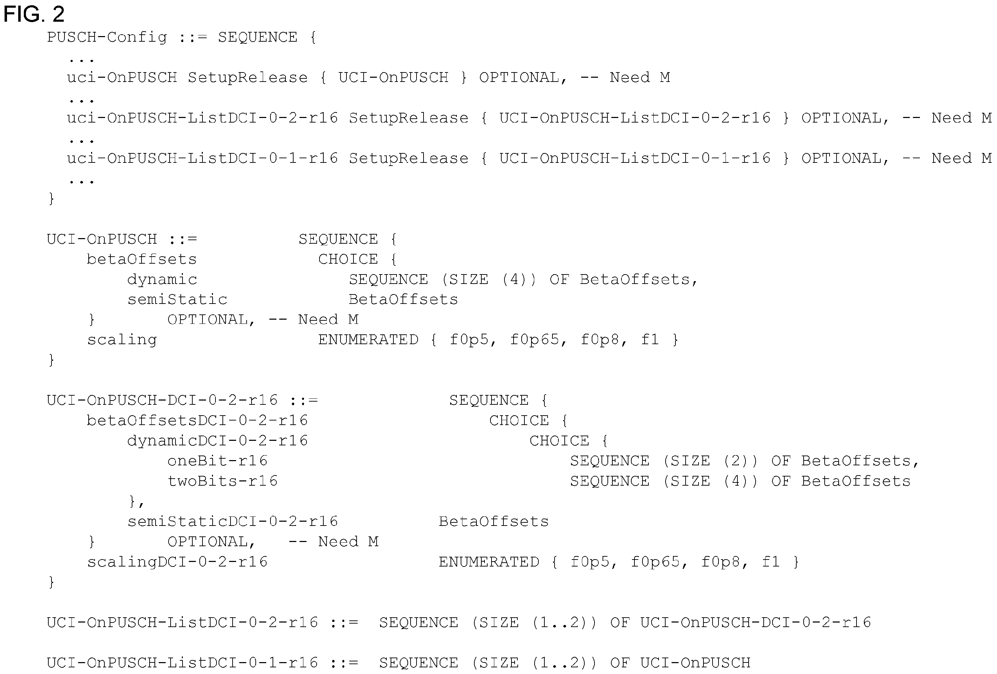

FIG. 2 is a diagram to show an example of the PUSCH configuration information including the beta offsets information elements in Rel-15/16 NR.

A UCI-OnPUSCH information element (UCI-OnPUSCH IE) defined in Rel-15/16 NR may include a betaOffsets parameter (betaOffsets) and a scaling parameter (scaling). When the betaOffsets parameter includes "dynamic", it is indicated that the dynamic beta offset is used for a DCI format other than DCI format 0_2, whereas when the betaOffsets parameter includes "semiStatic", it is indicated that the semi-static beta offset is used for the DCI format other than DCI format 0_2. "dynamic" includes size-4 beta offsets (BetaOffsets) information elements (that is, four beta offsets (BetaOffsets) information elements), and "semiStatic" includes one beta offsets (BetaOffsets) information element.

The scaling parameter indicates a scaling coefficient for limitation on the number of REs assigned to the UCI on PUSCH for a DCI format other than DCI format 0_2. For example, f0p5 corresponds to 0.5.

A UCI-OnPUSCH-DCI-0-2 information element (UCI-OnPUSCH-DCI-0-2 IE) defined in Rel-16 NR indicates a betaOffsets parameter (betaOffsetsDCI-0-2) and a scaling parameter (scalingDCI-0-2) for DCI format 0_2. This is different from the UCI-OnPUSCH information element in that size-2 beta offsets information elements can be configured instead of the size-4 beta offsets information elements regarding the dynamic beta offset. Depending on the size, the size of the beta offset indicator field included in DCI format 0_2 varies between 1 bit and 2 bits. Note that, when the semi-static beta offset is configured, the size of the beta offset indicator field included in DCI format 0_2 is 0 bits as well.

In Rel-16 NR, the UE may be configured to generate two HARQ-ACK codebooks by a higher layer parameter (pdsch-HARQ-ACK-CodebookList). In this case, regarding DCI format 0_1, the UE may be configured with two UCI-OnPUSCH information elements (UCI-OnPUSCH IEs) by a list (UCI-OnPUSCH-ListDCI-0-1-r16). Regarding DCI format 0_2, the UE may be configured with two UCI-OnPUSCH-DCI-0-2 information elements (UCI-OnPUSCH-DCI-0-2 IEs) by a list (UCI-OnPUSCH-ListDCI-0-2-r16). A first entry in these lists may correspond to a first HARQ-ACK codebook, and a second entry may correspond to a second HARQ-ACK codebook.

Note that the first HARQ-ACK codebook relates to a Physical Uplink Control Channel (PUCCH) of priority index 0, and the second HARQ-ACK codebook relates to a PUCCH of priority index 1. A larger value of the priority index indicates a higher priority. The priority will be described later.

Uplink transmission (PUSCH transmission) without a dynamic grant is also referred to as a configured grant PUSCH (CG PUSCH). An actual uplink grant (UL grant) of the CG PUSCH is configured by RRC signaling (ConfiguredGrantConfig information element) in a case of a type 1 CG PUSCH, and is provided by a PDCCH (DCI) in a case of a type 2 CG PUSCH.

The beta offsets information element related to the dynamic beta offset or the semi-static beta offset regarding the CG PUSCH is configured for the UE by being included in CG PUSCH configuration information (ConfiguredGrantConfig information element).

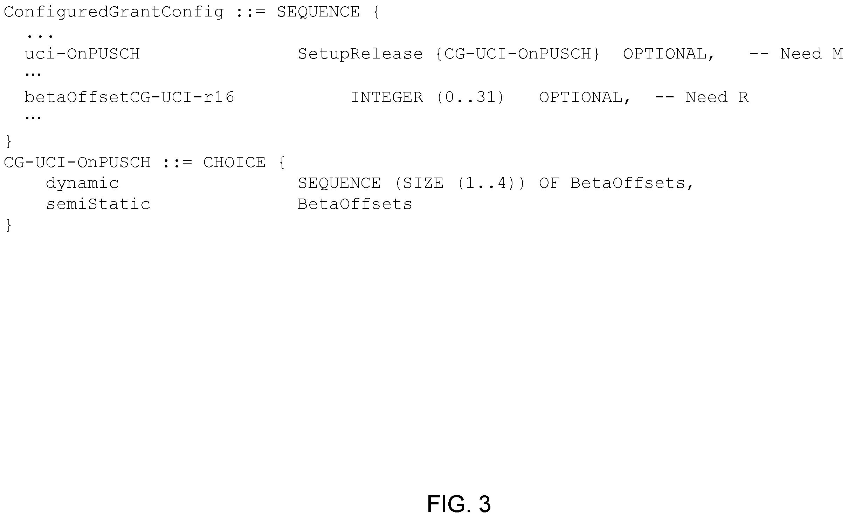

FIG. 3 is a diagram to show an example of the CG PUSCH configuration information including the beta offsets information elements in Rel-15/16 NR.

A CG-UCI-OnPUSCH information element (CG-UCI-OnPUSCH IE) defined in Rel-15/16 NR includes a configuration (one or more BetaOffsets information elements corresponding to "dynamic" or "semiStatic") in transmission of the UCI (HARQ-ACK/CSI) not including the CG-UCI on the CG PUSCH. When the CG-UCI-OnPUSCH information element includes "dynamic", it is indicated that the dynamic beta offset is used for UCI on CG PUSCH, and when the CG-UCI-OnPUSCH information element includes "semiStatic", it is indicated that the semi-static beta offset is used for the UCI on CG PUSCH. "dynamic" includes size-1 to size-4 beta offsets (BetaOffsets) information elements, and "semiStatic" includes one beta offsets (BetaOffsets) information element.

Note that "semiStatic" is configured regarding the type 1 CG PUSCH. When "dynamic" is configured regarding the type 2 CG PUSCH, the UE is indicated with one out of up to four offset indexes by the beta offset indicator field included in DCI for activation of the CG PUSCH. The UE uses a beta offsets information element corresponding to the indicated offset index for determination of the beta offset for the UCI to be transmitted on the CG PUSCH.

A betaOffset parameter (betaOffsetCG-UCI-r16) for the CG-UCI in the CG PUSCH defined in Rel-16 NR indicates an index related to the beta offset in transmission of only the CG-UCI on the CG PUSCH. Note that, when the HARQ-ACK and the CG-UCI are transmitted on the CG PUSCH, the beta offset to be applied may be the beta offset for the HARQ-ACK.

Note that the CG-UCI may include a HARQ process number (HPN) field, a redundancy version (RV) field, a new data indicator (NDI) field, and a channel occupancy time (COT) sharing information field.

### (Priority)

In NR of Rel. 16 or later versions, priorities at a plurality of levels (for example, two levels) can be configured for signals/channels. For example, it is assumed that communication control (for example, transmission control at the time of collision) is performed with different priorities being configured for signals/channels respectively corresponding to different traffic types (also referred to as services, service types, communication types, use cases, or the like). This enables communication control based on priorities being different depending on service types or the like for the same signal/channel.

The priority may be configured/defined for at least one of information (for example, UCI, channel state information (CSI)), a channel (a Physical Downlink Shared Channel (PDSCH), a PUSCH, a PUCCH, or the like), a reference signal (for example, a CSI-RS, an SRS, or the like), and a HARQ-ACK codebook. Different priorities may be respectively configured for a PUCCH used for transmission of an SR, a PUCCH used for transmission of a HARQ-ACK, and a PUCCH used for transmission of CSI.

The priority may be defined by a first priority (for example, high, 1, or the like) and a second priority (for example, low, 0, or the like) being a lower priority than the first priority. Alternatively, three or more types of priorities may be configured. The priority may be represented by a priority index, and a larger priority index may indicate a higher priority.

The priority being high may be expressed as high priority (HP), and the priority being low may be expressed as low priority (LP). For example, a PUSCH having a high priority may be expressed as an HP PUSCH, and a HARQ-ACK having a low priority may be expressed as an LP HARQ-ACK.

The priorities may be configured for a HARQ-ACK for a dynamically scheduled PDSCH, a HARQ-ACK for a semi-persistent scheduling (SPS) PDSCH, and a HARQ-ACK for SPS PDSCH release. The priorities may be configured for HARQ-ACK codebooks corresponding to these HARQ-ACKs. Note that, when the priority is configured for the PDSCH, the priority of the PDSCH may be interpreted as the priority of the HARQ-ACK for the PDSCH.

The priorities may be configured for the dynamic PUSCH, the CG PUSCH, and the like.

Information related to the priority may be notified from a base station to the UE, using at least one of higher layer signaling and DCI. For example, the priority of a scheduling request may be configured using a higher layer parameter (for example, schedulingRequestPriority). The priority of the HARQ-ACK for the PDSCH (for example, the dynamic PDSCH) scheduled using DCI may be notified using the DCI. The priority of the HARQ-ACK for the SPS PDSCH may be configured using a higher parameter (for example, HARQ-ACK-Codebook-indicator-forSPS), or may be notified using DCI for indicating activation of the SPS

### PDSCH.

A certain priority (for example, low) may be configured for aperiodic CSI (A-CSI)/semi-persistent CSI (SP-CSI) to be transmitted on the PUCCH. In contrast, the priority of aperiodic CSI (A-CSI)/SP-CSI to be transmitted on the PUSCH may be notified using DCI (for example, trigger DCI or activation DCI).

The priority of a dynamic grant-based PUSCH may be notified using a priority indicator field in DCI for scheduling the PUSCH. The priority of a configured grant-based PUSCH may be configured using a higher layer parameter (for example, priority). A certain priority (for example, low) may be configured for a P-SRS/SP-SRS and an A-SRS triggered by DCI (for example, DCI format 0_1/DCI format 2_3).

When a plurality of UL signals/UL channels overlap (or collide), the UE may control UL transmission, based on the priorities.

The case in which a plurality of UL signals/UL channels overlap may be a case in which time resources (or time resources and frequency resources) of a plurality of UL signals/UL channels overlap, or a case in which transmission timings of a plurality of UL signals/UL channels overlap. The time resource may be interpreted as a time domain. The time resource may be a unit of a symbol, a slot, a sub-slot, or a subframe.

A plurality of UL signals/UL channels overlapping in the same UE (for example, intra-UE) may mean a plurality of UL signals/UL channels overlapping at least in the same time resources (for example, symbol). UL signals/UL channels colliding different UEs (for example, inter-UE) may mean a plurality of UL signals/UL channels overlapping in the same time resources (for example, symbol) and frequency resources (for example, RB).

For example, when a plurality of UL signals/UL channels having the same priority overlap, the UE may perform control to multiplex the plurality of UL signals/UL channels on one UL channel and transmit the UL channel.

For example, when a HARQ-ACK configured with the first priority (high) (or a PUCCH for HARQ-ACK transmission) and UL data/UL-SCH configured with the first priority (high) (or a PUSCH for UL data/UL-SCH transmission) overlap, the UE may multiplex (or map) the HARQ-ACK on the PUSCH and transmit both of the UL data and the HARQ-ACK.

When a plurality of UL signals/UL channels having different priorities overlap, the UE may perform control to perform UL transmission having a high priority (for example, prioritize UL transmission having a high priority) and to not perform (for example, to drop) UL transmission having a low priority.

When UL data/HARQ-ACK configured with the first priority (high) (or a UL channel for UL data/HARQ-ACK transmission) and UL data/HARQ-ACK configured with the second priority (low) (or a UL channel for UL data/HARQ-ACK transmission) overlap, the UE may perform control to drop the UL data/HARQ-ACK having a low priority and preferentially transmit (prioritize) the UL data/HARQ-ACK having a high priority. Note that the UE may change (for example, defer or shift) transmission timing of UL transmission having a low priority.

When more than two (or three or more) UL signals/UL channels overlap in the time domain, transmission may be controlled in two steps. In step 1, one UL channel is selected, on which UL signals respectively transmitted in UL transmissions having the same priority are multiplexed. In step 2, control may be performed to preferentially transmit UL transmission having a high priority and to drop UL transmission having a low priority between UL transmissions having different priorities.

In this manner, the UE can solve a collision between a plurality of UL transmissions having the same priority in step 1, and solve a collision between a plurality of UL transmissions having different priorities in step 2.

### (Simultaneous Transmission/Multiplexing of UL Transmissions Having Different Priorities)

The following case is also considered in which a plurality of UL transmissions respectively transmitted in different carriers (or cells, CCs) overlap in the time domain and the plurality of UL transmissions have different priorities.

For example, when UL channels/UL signals are scheduled in different inter-cell carriers supported by different RFs (Radio Frequencies), transmitting the respective UL channels/UL signals is useful from the perspective of achievement of low latency and spectral efficiency. When the UE supports RF processing for each of the different carriers (CCs), transmitting UL channels/UL signals in the respective carriers allows for enhancement of resource use efficiency and achievement of low latency.

For example, it may be supported that simultaneous transmissions of the PUCCH/PUSCH having different priorities (for example, PHY priorities) in different cells are configured using RRC in the same PUCCH group for each UE supporting an inter-band carrier aggregation (for example, inter-band CA) function.

Alternatively, it may be supported that, when a plurality of UL transmissions having different priorities are scheduled within a cell (intra-cell)/between cells (inter-cell) or the like, the UL transmissions having different priorities are multiplexed (for example, transmitted using the same UL channel). For example, a UL transmission having a certain priority may be multiplexed on a UL channel for a UL transmission having another priority to be transmitted, and the plurality of UL transmissions may be thereby supported.

Whether or not UCI (for example, a HARQ-ACK) is multiplexed on/mapped to a UL channel (for example, a PUSCH) having a priority different from that of the UCI (for example, enabling/disabling, or activation/deactivation) may be configured using higher layer signaling.

In Rel. 17, when the HARQ-ACK (LP HARQ-ACK) having a low priority is multiplexed on the PUSCH (HP PUSCH) having a high priority, support of 0 < beta offset < 1 is under study. Regarding a case of multiplexing an LP HARQ-ACK on an HP PUSCH and a case of multiplexing an HP HARQ-ACK on an LP PUSCH, configuration of indexes related to the beta offsets different from other cases are under study.

For example, new definition of a beta offsets information element (which may be referred to as, for example, a BetaOffsetsCrossPri0 IE) for the LP HARQ-ACK multiplexed on an HP dynamic PUSCH, a beta offsets information element (which may be referred to as, for example, a BetaOffsetsCrossPri1 IE) for the HP HARQ-ACK multiplexed on an LP dynamic PUSCH, and the like is under study. Note that these beta offsets information elements may include parameters corresponding to the existing beta offsets information elements (BetaOffsets IE) betaOffsetACK-Index1, betaOffsetACK-Index2, and betaOffsetACK-Index3 (parameters related to the CSI part 1 and the CSI part 2 need not be included).

Parameters/information elements (for example, betaOffsetsCrossPri0-r17, betaOffsetsCrossPri1-r17, betaOffsetsCrossPri0DCI-0-2-r17, betaOffsetsCrossPri1DCI-0-2-r17, CG-betaOffsetsCrossPri0, and CG-betaOffsetsCrossPri1) are under study, which are obtained by replacing the existing beta offsets information elements (BetaOffsets IEs) in the existing betaOffsets parameter (betaOffsets), the betaOffsets parameter (betaOffsetsDCI-0-2) for DCI format 0_2, and the CG-UCI-OnPUSCH information element (CG-UCI-OnPUSCH IE) with the BetaOffsetsCrossPri0 IE or the BetaOffsetsCrossPri1 IE.

### (PUSCH Transmission of Two Codewords)

In Rel-15/16 NR, the UE transmits one codeword (CW) using one PUSCH. In Rel-17 NR, it is under study that the UE transmits more than one CW using one PUSCH. For example, support of 2CW transmission for ranks 5 to 8, support of 2CW transmission for ranks 2 to 8, and the like are under study.

In the Rel-15 UE and the Rel-16 UE, it is assumed that only one beam and one panel are used for UL transmission at a certain time, whereas in Rel. 17 or later versions, simultaneous UL transmission (for example, PUSCH transmission) of a plurality of beams and multiple panels to one or more TRPs for the sake of enhancement of UL throughput and reliability is under study.

The base station may configure or indicate panel-specific transmission for UL transmission, using a UL TCI or a panel ID. The UL TCI (UL TCI state) may be based on signaling similar to a DL beam indication supported in Rel. 15. The panel ID may be implicitly or explicitly applied to transmission of at least one of target RS resources (or a target RS resource set) and a PUCCH/PUSCH/SRS/PRACH. When the panel ID is explicitly notified, the panel ID may be configured in at least one of a target RS, a target channel, and a reference RS (for example, DL RS resource configuration or spatial relation information).

Regarding multi-panel simultaneous UL transmission, support of a 2CW PUSCH with four or less ranks (layers) is under study.

When the UCI on PUSCH is used in the 2CW PUSCH (hereinafter also referred to as UCI on 2 CW PUSCH), the UCI may be multiplexed on only one transport block (TB) (for example, only a TB corresponding to a lower TB index), the UCI may be divided into two parts and each of them may be multiplexed on a different transport block (TB), or the UCI may be copied and the same UCI may be multiplexed on each TB.

However, regarding the UCI on 2 CW PUSCH, a study has not yet been carried out on how to perform a configuration of the beta offset. For example, a study has not yet been carried out on whether or not the same beta offset configuration is used between a case in which the UCI on PUSCH is used in a 1CW PUSCH (hereinafter also referred to as UCI on 1 CW PUSCH) and a case of the UCI on 2 CW PUSCH. Unless UCI on PUSCH transmission for a plurality of CWs is appropriately performed, throughput may be reduced and communication quality may be reduced.

In view of this, the inventors of the present invention came up with the idea of a method of configuring a suitable beta offset for the 2 CW PUSCH.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C".

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted. Note that the configuration may be performed (or may be notified) based on RRC signaling, and the activation/deactivation may be performed (or may be notified) based on a MAC CE.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information", "one or a plurality of pieces of spatial relation information", and the like. The TCI state and the TCI may be interchangeably interpreted.

In the present disclosure, an X CW PUSCH (X is an integer; for example, X = 1, 2, ...) may be interchangeably interpreted as a PUSCH for transmitting X CWs, a PUSCH for X CWs, and the like. The 1 CW PUSCH and the 2 CW PUSCH may be interpreted as a PUSCH for a first number of CWs and a PUSCH for a second number of CWs, respectively. Each of the first number and the second number may be any integer.

In the present disclosure, UCI on PUSCH for the X CW PUSCH (or transmission of UCI using the X CW PUSCH) may be interchangeably interpreted as UCI on X CW PUSCH.

The dynamic PUSCH may be interchangeably interpreted as a PUSCH dynamically scheduled using a DCI format.

DCI format 0_2 in the following description may be interpreted as a specific DCI format (for example, any future DCI format).

In the present disclosure, a field, a parameter, an information element (IE), and the like may be interchangeably interpreted.

In the present disclosure, repetition (one repetition), an occasion, and a channel may be interchangeably interpreted. In the present disclosure, UL data, a TB, a CW, and UCI may be interchangeably interpreted.

In the present disclosure, two CWs transmitted using the PUSCH may be CWs having different contents, or may be CWs having the same content. The PUSCH for transmitting two CWs may be regarded as one PUSCH that is simultaneously or repeatedly transmitted.

In the following embodiments, "plurality of" and "two" may be interchangeably interpreted.

The number of layers of PUSCH transmission in the following embodiments may be greater than 4, or may be equal to or less than 4. For example, PUSCH transmission of two CWs in the present disclosure may be performed with the number of layers being equal to or less than 4 (for example, 2). Likewise, the maximum number of layers is not limited to 4 or greater, and a number less than 4 may be applied.

PUSCH transmission in the following embodiments may or may not presuppose use of multiple panels (may be applied irrespective of panel(s)).

### (Radio Communication Method)

### <First Embodiment>

A first embodiment relates to the dynamic PUSCH (hereinafter referred to as the dynamic PUSCH of the first embodiment) scheduled using a DCI format other than DCI format 0_2.

The UE may be separately (or independently or differently) configured with an RRC parameter for the UCI on 1 CW PUSCH and an RRC parameter for the UCI on 2 CW PUSCH regarding the dynamic PUSCH of the first embodiment.

These RRC parameters may correspond to at least one of the UCI-OnPUSCH information element, the betaOffsets parameter, the scaling parameter, and the BetaOffsets information element.

In a case of transmission of the UCI on 1 CW PUSCH, the UE determines the beta offset to be used, based on the beta offsets information element corresponding to the RRC parameter for the UCI on 1 CW PUSCH. In a case of transmission of the UCI on 2 CW PUSCH, the UE determines the beta offset to be used, based on the beta offsets information element corresponding to the RRC parameter for the UCI on 2 CW PUSCH.

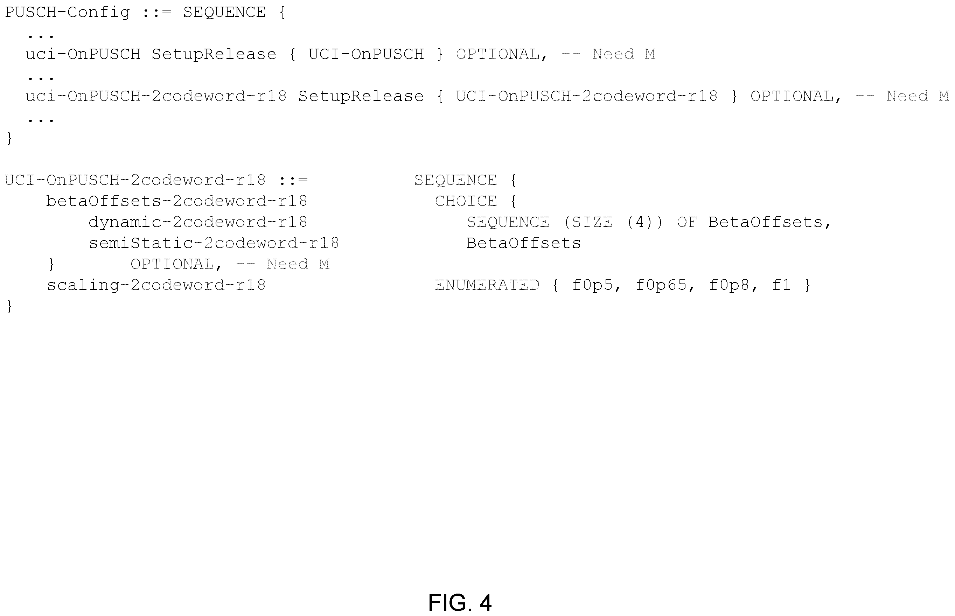

FIG. 4 is a diagram to show an example of the UCI-OnPUSCH information element for the UCI on 1 CW PUSCH and the UCI-OnPUSCH information element for the UCI on 2 CW PUSCH regarding the dynamic PUSCH of the first embodiment.

Note that "-rXX" in the present disclosure indicates a parameter to be defined in 3GPP Rel. XX. The term of the parameter is not limited to the illustrated term (for example, "-rXX" may be omitted). The parameter provided with "-rXX" may be hereinafter referred to by a term without "-rXX". The release of 3GPP to which the present disclosure is applied is not limited to Rel. 18.

In the example of FIG. 4, the UCI-OnPUSCH information element defined in Rel-15/16 NR includes a configuration (a betaOffsets parameter, a scaling parameter) for the UCI on 1 CW PUSCH regarding the dynamic PUSCH of the first embodiment.

A UCI-OnPUSCH-2codeword-r18 information element includes a configuration (a betaOffsets parameter (betaOffsets-2codeword-r18), a scaling parameter (scaling-2codeword-r18)) for the UCI on 2 CW PUSCH regarding the dynamic PUSCH of the first embodiment.

When the 2 CW PUSCH is configured for the UE, the PUSCH configuration information (PUSCH-Config information element) as shown in the example of FIG. 4 including the UCI-OnPUSCH information element for the UCI on 1 CW PUSCH and the UCI-OnPUSCH-2codeword-r18 information element for the UCI on 2 CW PUSCH may be configured for the UE.

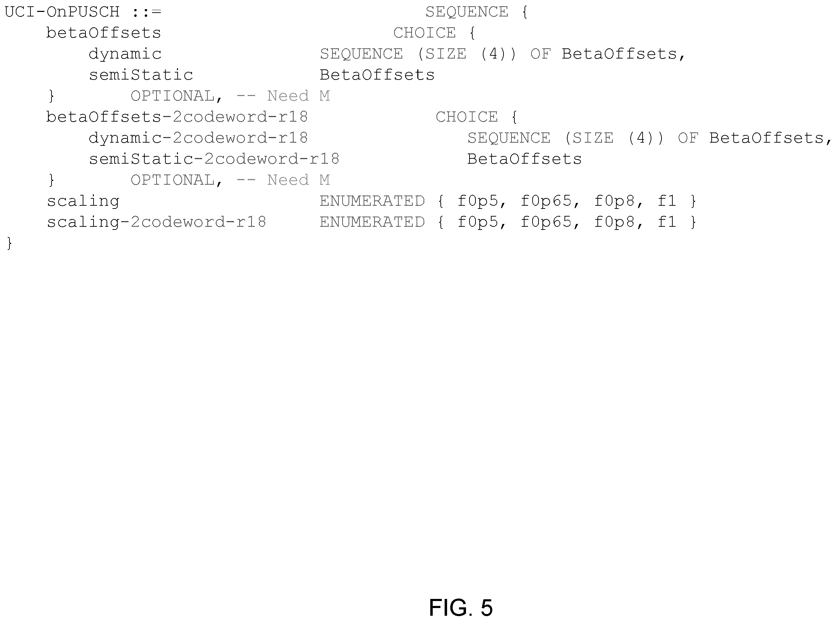

FIG. 5 is a diagram to show an example of a betaOffsets parameter and a scaling parameter for the UCI on 1 CW PUSCH and a betaOffsets parameter and a scaling parameter for the UCI on 2 CW PUSCH regarding the dynamic PUSCH of the first embodiment.

In the example of FIG. 5, a betaOffsets parameter (betaOffsets) and a scaling parameter (scaling) defined in Rel-15/16 NR included in one UCI-OnPUSCH information element correspond to the betaOffsets parameter and the scaling parameter for the UCI on 1 CW PUSCH regarding the dynamic PUSCH of the first embodiment.

A new betaOffsets parameter (betaOffsets-2codeword-r18) and a new scaling parameter (scaling-2codeword-r18) included in one UCI-OnPUSCH information element correspond to the betaOffsets parameter and the scaling parameter for the UCI on 2 CW PUSCH regarding the dynamic PUSCH of the first embodiment.

When the 2 CW PUSCH is configured for the UE, the PUSCH configuration information (PUSCH-Config information element) including the UCI-OnPUSCH information element as shown in FIG. 5 may be configured for the UE.

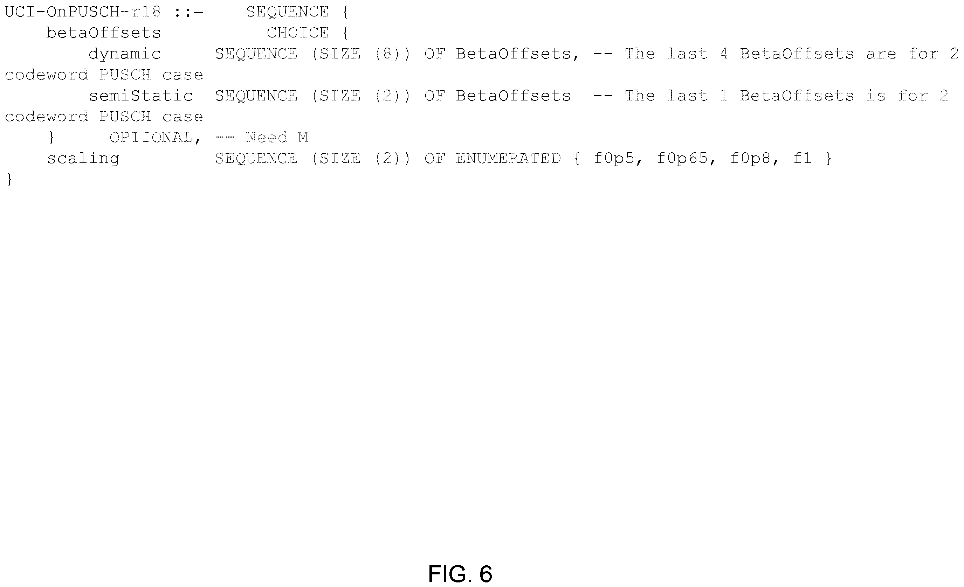

FIG. 6 is a diagram to show an example of the UCI-OnPUSCH information element for the UCI on 1 CW PUSCH and the UCI on 2 CW PUSCH regarding the dynamic PUSCH of the first embodiment.

In the example of FIG. 6, a new UCI-OnPUSCH information element (UCI-OnPUSCH-r18) includes a configuration for the UCI on 1 CW PUSCH and a configuration for the UCI on 2 CW PUSCH regarding the dynamic PUSCH of the first embodiment. For example, when the betaOffsets parameter includes "dynamic", of size-8 BetaOffsets information elements (that is, eight BetaOffsets information elements) corresponding to the "dynamic", the first four may correspond to the BetaOffsets information elements for the UCI on 1 CW PUSCH and the last four may correspond to the BetaOffsets information elements for the UCI on 2 CW PUSCH. Note that "first" and "last" may be interchanged.

When the betaOffsets parameter includes "semiStatic", of size-2 BetaOffsets information elements (that is, two BetaOffsets information elements) corresponding to the "semiStatic", the first one may correspond to the BetaOffsets information element for the UCI on 1 CW PUSCH and the last one may correspond to the BetaOffsets information element for the UCI on 2 CW PUSCH. Note that "first" and "last" may be interchanged.

Of size-2 enumerated types (that is, two enumerated types) corresponding to scaling parameters, the first one may correspond to the scaling parameter for the UCI on 1 CW PUSCH and the last one may correspond to the scaling parameter for the UCI on 2 CW PUSCH. Note that "first" and "last" may be interchanged.

When the 2 CW PUSCH is configured for the UE, the PUSCH configuration information (PUSCH-Config information element) including the new UCI-OnPUSCH information element as shown in FIG. 6 may be configured for the UE. Note that, when the new UCI-OnPUSCH information element is notified, the existing UCI-OnPUSCH information element (UCI-OnPUSCH) may be ignored by the UE. When the new UCI-OnPUSCH information element is notified, the UE need not expect that the existing UCI-OnPUSCH information element (UCI-OnPUSCH) is notified.

Note that a new BetaOffsets information element (for example, BetaOffsets-r18) may be introduced, which includes an existing BetaOffsets information element (BetaOffsets) for the UCI on 1 CW PUSCH and an existing BetaOffsets information element (BetaOffsets) for the UCI on 2 CW PUSCH. For example, in the example of FIG. 6, "dynamic" may include size-4 BetaOffsets-r18 instead of size-8 BetaOffsets information elements. In the example of FIG. z, "semiStatic" may include BetaOffsets-r18 instead of size-2 BetaOffsets information elements.

Note that, in the first embodiment, at least one RRC parameter (for example, at least one of the UCI-OnPUSCH information element, the betaOffsets parameter, the scaling parameter, and the BetaOffsets information element) may be used in common to the UCI on 1 CW PUSCH and the UCI on 2 CW PUSCH. In this case, for example, betaOffsets-2codeword-r18, scaling-2codeword-r18, and the like described above in FIGS. 4 and 5 need not be included in UCI-OnPUSCH-2codeword-r18 or UCI-OnPUSCH, and the scaling parameter of FIG. z may include only one enumerated type.

### [Variation 1 of First Embodiment]

The first embodiment described above is based on an assumption that the same betaOffsets/scaling is referred to (used) in a case where the UCI is multiplexed on a first CW (which may be referred to as a CW1, for example, but may be referred to as a CW0) and a case where the UCI is multiplexed on a second CW (which may be referred to as a CW2, for example, but may be referred to as a CW1) regarding the UCI on 2 CW PUSCH. On the other hand, different betaOffsets/scaling may be referred to in these cases. The variations will be described below.

### [[Variation 1-1 of First Embodiment]]

In Variation 1-1 of the first embodiment, the RRC parameter (for example, at least one of the UCI-OnPUSCH information element, the betaOffsets parameter, the scaling parameter, and the BetaOffsets information element) defined in Rel-15/16 NR may correspond to the configuration for the UCI on 1 CW PUSCH and the configuration for the first CW in the UCI on 2 CW PUSCH.

When the 2 CW PUSCH is configured for the UE, the UE may be configured with one set of new RRC parameters (at least one of betaOffsets-2codeword-r18, scaling-2codeword-r18, UCI-OnPUSCH-2codeword-r18, and the like) for the UCI on 2 CW PUSCH as described in the first embodiment.

When the 2 CW PUSCH is configured for the UE, the RRC parameter defined in Rel-15/16 NR may be used for the first CW in the UCI on 2 CW PUSCH, and the one set of the new RRC parameters may be used for the second CW in the UCI on 2 CW

### PUSCH.

### [[Variation 1-2 of First Embodiment]]

In Variation 1-2 of the first embodiment, the RRC parameter (for example, at least one of the UCI-OnPUSCH information element, the betaOffsets parameter, the scaling parameter, and the BetaOffsets information element) defined in Rel-15/16 NR may correspond only to the configuration for the UCI on 1 CW PUSCH and need not correspond to the configuration for the UCI on 2 CW PUSCH.

When the 2 CW PUSCH is configured for the UE, the UE may be configured with two sets of new RRC parameters (at least one of betaOffsets-2codeword-r18, scaling-2codeword-r18, UCI-OnPUSCH-2codeword-r18, and the like) for the UCI on 2 CW PUSCH as described in the first embodiment.

When the 2 CW PUSCH is configured for the UE, a first set of the new RRC parameters may be used for the first CW in the UCI on 2 CW PUSCH and a second set of the new RRC parameters may be used for the second CW in the UCI on 2 CW

### PUSCH.

### [[Variation 1-3 of First Embodiment]]

In Variation 1-3 of the first embodiment, the same betaOffsets/scaling may be referred to or different betaOffsets/scaling may be referred to in a case where the UCI is multiplexed on the PUSCH related to the same panel and a case where the UCI is multiplexed on the PUSCH related to different panels.

Variation 1-3 of the first embodiment may correspond to an embodiment in Variation 1-1/1-2 in which "the first CW in the UCI on 2 CW PUSCH" is interpreted as "the case where the UCI is multiplexed on the PUSCH related to the same panel" and the "the second CW in the UCI on 2 CW PUSCH" is interpreted as "the case where the UCI is multiplexed on the PUSCH related to different panels". Note that these interpretations may be interchanged.

### [Variation 2 of First Embodiment]

In the first embodiment and Variation 1, "dynamic (or dynamic-2codeword-r18)" and "semiStatic (or semiStatic-2codeword-r18)" constituting the betaOffsets parameter (betaOffsets or betaOffsets-2codeword-r18) may both be used for the UCI on 2 CW PUSCH, or only one of them (for example, only "dynamic (or dynamic-2codeword-r18)") may be used for the UCI on 2 CW PUSCH. Note that, when only one of them (for example, only "dynamic (or dynamic-2codeword-r18)") is used for the UCI on 2 CW PUSCH, the other (for example, "semiStatic (or semiStatic-2codeword-r18)") need not be included in the betaOffsets parameter.

### [Variation 3 of First Embodiment]

In the first embodiment and Variations 1 and 2, the UCI-OnPUSCH information element (UCI-OnPUSCH or UCI-OnPUSCH-2codeword-r18) may be included in UCI-OnPUSCH-ListDCI-0-1-r16, and may be used for determination of the beta offset for transmission of the UCI on 2 CW PUSCH regarding DCI format 0_1.

According to the first embodiment described above, the UE can appropriately determine the beta offset for the 2 CW PUSCH regarding the dynamic PUSCH scheduled using a DCI format other than DCI format 0_2.

### <Second Embodiment>

A second embodiment relates to the dynamic PUSCH (hereinafter referred to as the dynamic PUSCH of the second embodiment) scheduled using DCI format 0_2.

The UE may be separately (or independently or differently) configured with an RRC parameter for the UCI on 1 CW PUSCH and an RRC parameter for the UCI on 2 CW PUSCH regarding the dynamic PUSCH of the second embodiment.

These RRC parameters may correspond to at least one of the UCI-OnPUSCH information element (UCI-OnPUSCH-DCI-0-2 IE) for DCI format 0_2, the betaOffsets parameter (betaOffsetsDCI-0-2) for DCI format 0_2, the scaling parameter (scalingDCI-0-2) for DCI format 0_2, and the BetaOffsets information element (BetaOffsets IE).

The second embodiment may correspond to an embodiment in the first embodiment (including Variations 1 to 5) in which the RRC parameters (for example, the UCI-OnPUSCH information element (UCI-OnPUSCH IE), the betaOffsets parameter (betaOffsets), the scaling parameter (scaling), and the BetaOffsets information element (BetaOffsets IE)) defined in Rel-15/16 NR are interpreted as corresponding RRC parameters (for example, the UCI-OnPUSCH information element (UCI-OnPUSCH-DCI-0-2 IE) for DCI format 0_2, the betaOffsets parameter (betaOffsetsDCI-0-2) for DCI format 0_2, the scaling parameter (scalingDCI-0-2) for DCI format 0_2, and the BetaOffsets information element (BetaOffsets IE)) for DCI format 0_2 defined in Rel-16 NR.

The second embodiment may correspond to an embodiment in the first embodiment (including Variations 1 to 5) in which the new RRC parameter (for example, the UCI-OnPUSCH information element (UCI-OnPUSCH-2codeword-r18 IE/UCI-OnPUSCH-r18 IE), the betaOffsets parameter (betaOffsets-2codeword-r18), the scaling parameter (scaling-2codeword-r18), and the BetaOffsets information element (BetaOffsets IE/BetaOffsets-2codeword-r18)) for the UCI on 2 CW PUSCH are interpreted as corresponding new RRC parameters (for example, the UCI-OnPUSCH information element (UCI-OnPUSCH-DCI-0-2-2codeword-r18 IE) for DCI format 0_2, the betaOffsets parameter (betaOffsetsDCI-0-2-2codeword-r18) for DCI format 0_2, the scaling parameter (scalingDCI-0-2-2codeword-r18) for DCI format 0_2, and the BetaOffsets information element (BetaOffsets IE/BetaOffsets-2codeword-r18)) for DCI format 0_2. Note that, regarding interpretation of the BetaOffsets information element, it may be interpreted as a new BetaOffsets information element for DCI format 0_2.

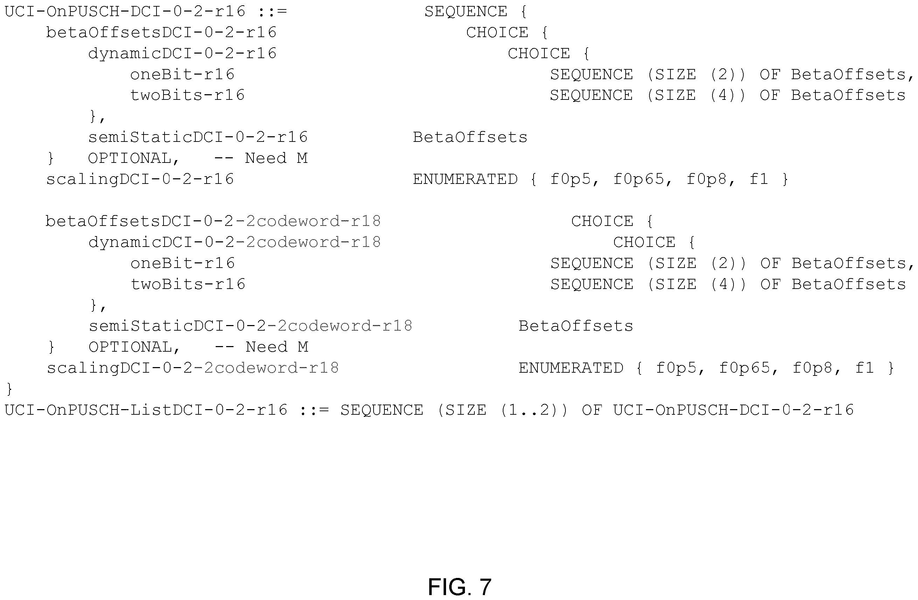

FIG. 7 is a diagram to show an example of a betaOffsets parameter and a scaling parameter for the UCI on 1 CW PUSCH and a betaOffsets parameter and a scaling parameter for the UCI on 2 CW PUSCH regarding the dynamic PUSCH of the second embodiment.

In the example of FIG. 7, the betaOffsets parameter (betaOffsetsDCI-0-2-r16) and the scaling parameter (scalingDCI-0-2) defined in Rel-16 NR included in one UCI-OnPUSCH information element (UCI-OnPUSCH-DCI-0-2-r16) may correspond to a betaOffsets parameter and a scaling parameter for the UCI on 1 CW PUSCH regarding the dynamic PUSCH of the second embodiment.

A new betaOffsets parameter (betaOffsetsDCI-0-2-2codeword-r18) and a new scaling parameter (scalingDCI-0-2-2codeword-r18) included in one UCI-OnPUSCH information element (UCI-OnPUSCH-DCI-0-2-r16) may correspond to a betaOffsets parameter and a scaling parameter for the UCI on 2 CW PUSCH regarding the dynamic PUSCH of the second embodiment.

According to the second embodiment described above, the UE can appropriately determine the beta offset for the 2 CW PUSCH regarding the dynamic PUSCH scheduled using DCI format 0_2.

### <Third Embodiment>

A third embodiment relates to the CG PUSCH.

The UE may be separately (or independently or differently) configured with an RRC parameter for the UCI on 1 CW PUSCH and an RRC parameter for the UCI on 2 CW PUSCH regarding the CG PUSCH of the third embodiment.

These RRC parameters may correspond to at least one of the CG-UCI-OnPUSCH information element (CG-UCI-OnPUSCH IE) for the CG PUSCH, the BetaOffsets information element (BetaOffsets IE), and the betaOffset parameter (betaOffsetCG-UCI-r16) for the CG-UCI in the CG PUSCH.

In a case of transmission of the UCI on 1 CW PUSCH, the UE determines the beta offset to be used, based on the beta offsets information element corresponding to the RRC parameter for the UCI on 1 CW PUSCH. In a case of transmission of the UCI on 2 CW PUSCH, the UE determines the beta offset to be used, based on the beta offsets information element corresponding to the RRC parameter for the UCI on 2 CW PUSCH.

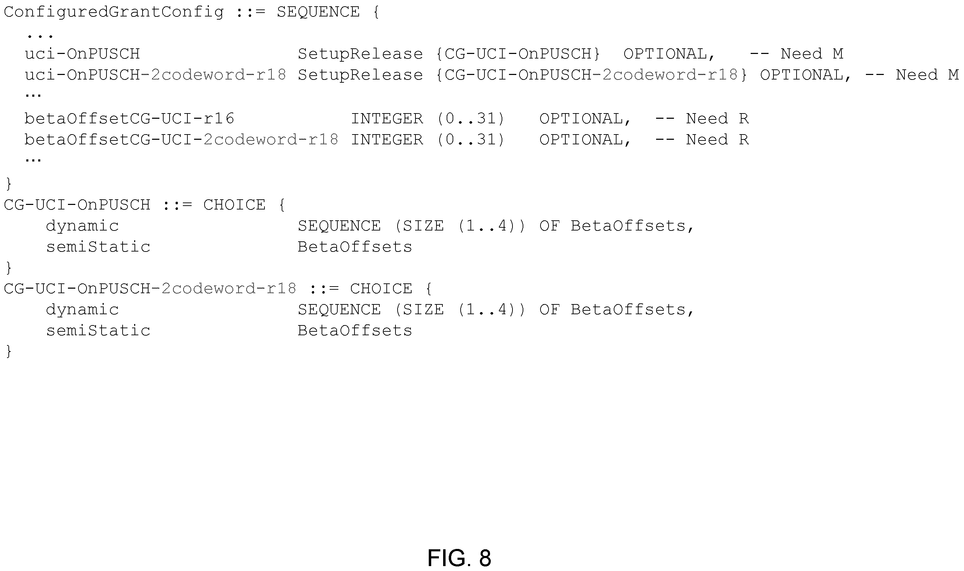

FIG. 8 is a diagram to show an example of the CG-UCI-OnPUSCH information element for the UCI on 1 CW PUSCH and the CG-UCI-OnPUSCH information element for the UCI on 2 CW PUSCH regarding the CG PUSCH of the third embodiment.

In the example of FIG. 8, the CG-UCI-OnPUSCH information element defined in Rel-15/16 NR includes a configuration (one or more BetaOffsets information elements corresponding to "dynamic" or "semiStatic") for the UCI on 1 CW PUSCH in a case of transmission of the UCI (HARQ-ACK/CSI) not including the CG-UCI on the CG PUSCH.

A CG-UCI-OnPUSCH-2codeword-r18 information element includes a configuration (one or more BetaOffsets information elements corresponding to "dynamic" or "semiStatic") for the UCI on 2 CW PUSCH in a case of transmission of the UCI (HARQ-ACK/CSI) not including the CG-UCI on the CG PUSCH.

In addition, in the example of FIG. 8, the betaOffset parameter (betaOffsetCG-UCI-r16) for the CG-UCI in the CG PUSCH defined in Rel-16 NR indicates an index related to the beta offset for the UCI on 1 CW PUSCH in a case of transmission of only the CG-UCI on the CG PUSCH.

A new betaOffset parameter (betaOffsetCG-UCI-2codeword-r18) for the CG-UCI in the CG PUSCH indicates an index related to the beta offset for the UCI on 2 CW PUSCH in a case of transmission of only the CG-UCI on the CG PUSCH.

When the 2 CW PUSCH (or the CG PUSCH for 2 CW) is configured for the UE, the CG PUSCH configuration information (ConfiguredGrantConfig information element) as shown in the example of FIG. 8 including the CG-UCI-OnPUSCH information element/new betaOffset parameter for the CG-UCI for the UCI on 1 CW PUSCH and the CG-UCI-OnPUSCH information element/new betaOffset parameter for the CG-UCI for the UCI on 2 CW PUSCH may be configured for the UE.

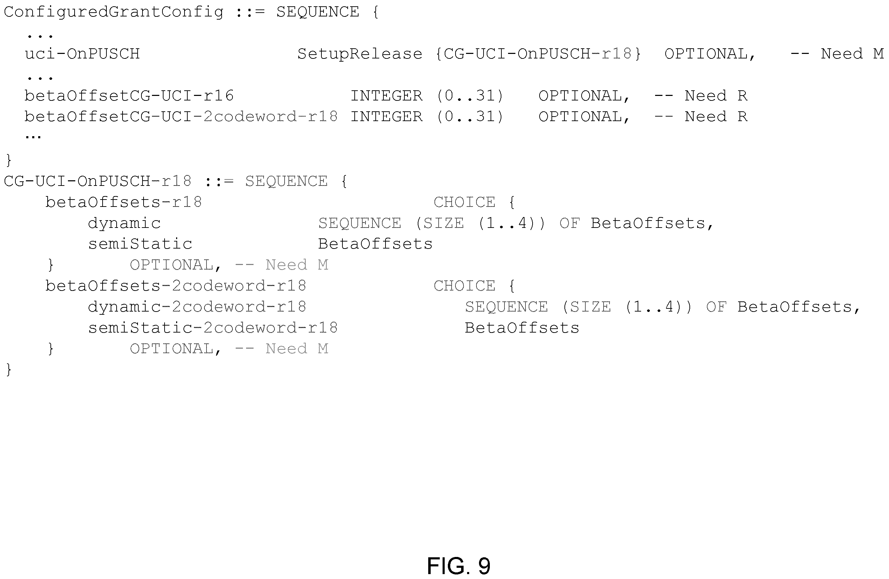

FIG. 9 is a diagram to show an example of the CG-UCI-OnPUSCH information element for the UCI on 1 CW PUSCH and the UCI on 2 CW PUSCH regarding the CG PUSCH of the third embodiment.

In the example of FIG. 9, a new CG-UCI-OnPUSCH information element (CG-UCI-OnPUSCH-r18) includes a configuration for the UCI on 1 CW PUSCH and a configuration for the UCI on 2 CW PUSCH regarding the dynamic PUSCH of the first embodiment.

In the example of FIG. 9, a new betaOffsets parameter (betaOffsets-18) included in one CG-UCI-OnPUSCH information element corresponds to the betaOffsets parameter for the UCI on 1 CW PUSCH. The betaOffsets parameter includes a configuration (one or more BetaOffsets information elements corresponding to "dynamic" or "semiStatic") for the UCI on 1 CW PUSCH in a case of transmission of the UCI (HARQ-ACK/CSI) not including the CG-UCI on the CG PUSCH.

A new betaOffsets parameter (betaOffsets-2codeword-r18) included in one UCI-OnPUSCH information element corresponds to the betaOffsets parameter for the UCI on 2 CW PUSCH. The betaOffsets parameter includes a configuration (one or more BetaOffsets information elements corresponding to "dynamic" or "semiStatic") for the UCI on 2 CW PUSCH in a case of transmission of the UCI (HARQ-ACK/CSI) not including the CG-UCI on the CG PUSCH.

The betaOffset parameters (betaOffsetCG-UCI-r16, betaOffsetCG-UCI-2codeword-r18) for the CG-UCI are similar to those described with reference to FIG. 8, and thus overlapping description will not be provided.

When the 2 CW PUSCH is configured for the UE, the CG PUSCH configuration information (ConfiguredGrantConfig information element) including the CG-UCI-OnPUSCH-r18 information element as shown in FIG. 9 may be configured for the UE.

According to the third embodiment described above, the UE can appropriately determine the beta offset for the 2 CW PUSCH regarding the CG PUSCH.

### <Fourth Embodiment>

A fourth embodiment relates to multiplexing of different priorities (in other words, multiplexing (UCI on PUSCH) of the UCI on the PUSCH in a case where a priority of the UCI and a priority of the PUSCH are different).

The fourth embodiment may correspond to an embodiment in which the first to third embodiments described above are differently interpreted regarding the above case.

One embodiment of the fourth embodiment may correspond to an embodiment in which the first embodiment (including Variations 1 to 5) is given the following interpretation:
- The RRC parameters defined in Rel-15/16 NR (for example, the betaOffsets parameter (betaOffsets) and the beta offsets information element (BetaOffsets IE)) are interpreted as corresponding RRC parameters related to multiplexing of different priorities which may be defined in Rel-17 NR (for example, the betaOffsets parameter (betaOffsetsCrossPri0-r17) for the LP HARQ-ACK multiplexed on the HP dynamic PUSCH, the betaOffsets parameter (betaOffsetsCrossPri1-r17) for the HP HARQ-ACK multiplexed on the LP dynamic PUSCH, the beta offsets information element (BetaOffsetsCrossPri0 IE) for the LP HARQ-ACK multiplexed on the HP dynamic PUSCH, and the beta offsets information element (BetaOffsetsCrossPri1 IE) for the HP HARQ-ACK multiplexed on the LP dynamic PUSCH).
- New RRC parameters for the UCI on 2 CW PUSCH (for example, the betaOffsets parameter (betaOffsets-2codeword-r18) and the BetaOffsets information element (BetaOffsets IE/BetaOffsets-2codeword-r18)) are interpreted as corresponding new RRC parameters related to multiplexing of different priorities for the UCI on 2 CW PUSCH (for example, the betaOffsets parameter (for example, betaOffsetsCrossPri0-2codeword-r18) for the LP HARQ-ACK multiplexed on the HP dynamic PUSCH, the betaOffsets parameter (for example, betaOffsetsCrossPri1-2codeword-r18) for the HP HARQ-ACK multiplexed on the LP dynamic PUSCH, the beta offsets information element (for example, BetaOffsetsCrossPri0-2codeword-r18 IE) for the LP HARQ-ACK multiplexed on the HP dynamic PUSCH, and the beta offsets information element (for example, BetaOffsetsCrossPri1-2codeword-r18 IE) for the HP HARQ-ACK multiplexed on the LP dynamic PUSCH).

One embodiment of the fourth embodiment may correspond to an embodiment in which the second embodiment (including Variations 1 to 5) is given the following interpretation:
- Corresponding RRC parameters for DCI format 0_2 defined in Rel-16 NR (for example, the betaOffsets parameter (betaOffsetsDCI-0-2) for DCI format 0_2 and the BetaOffsets information element (BetaOffsets IE)) are interpreted as corresponding RRC parameters related to multiplexing of different priorities which may be defined in Rel-17 NR (for example, the betaOffsets parameter (betaOffsetsCrossPri0DCI-0-2-r17) for the LP HARQ-ACK multiplexed on the HP dynamic PUSCH, the betaOffsets parameter (betaOffsetsCrossPri1DCI-0-2-r17) for the HP HARQ-ACK multiplexed on the LP dynamic PUSCH, the beta offsets information element (BetaOffsetsCrossPri0 IE) for the LP HARQ-ACK multiplexed on the HP dynamic PUSCH, and the beta offsets information element (BetaOffsetsCrossPri1 IE) for the HP HARQ-ACK multiplexed on the LP dynamic PUSCH).
- New RRC parameters for the UCI on 2 CW PUSCH (for example, the betaOffsets parameter (betaOffsetsDCI-0-2-2codeword-r18) for DCI format 0_2 and the BetaOffsets information element (BetaOffsets IE/BetaOffsets-2codeword-r18 IE)) are interpreted as corresponding new RRC parameters related to multiplexing of different priorities for the UCI on 2 CW PUSCH (for example, the betaOffsets parameter (for example, betaOffsetsCrossPri0DCI-0-2-2codeword-r18) for the LP HARQ-ACK multiplexed on the HP dynamic PUSCH, the betaOffsets parameter (for example, betaOffsetsCrossPri1DCI-0-2-2codeword-r18) for the HP HARQ-ACK multiplexed on the LP dynamic PUSCH, the beta offsets information element (for example, BetaOffsetsCrossPri0-2codeword-r18 IE) for the LP HARQ-ACK multiplexed on the HP dynamic PUSCH, and the beta offsets information element (for example, BetaOffsetsCrossPri1-2codeword-r18 IE) for the HP HARQ-ACK multiplexed on the LP dynamic PUSCH).

One embodiment of the fourth embodiment may correspond to an embodiment in which the third embodiment is given at least one of the following interpretations:
- The RRC parameters defined in Rel-15/16 NR or the new RRC parameters for the UCI on 1 CW PUSCH (for example, the CG-UCI-OnPUSCH information element (CG-UCI-OnPUSCH IE) for the CG PUSCH, the betaOffsets parameter (betaOffsets-r18), and the BetaOffsets information element (BetaOffsets IE)) are interpreted as corresponding RRC parameters related to multiplexing of different priorities which may be defined in Rel-17 NR (for example, the betaOffsets parameter (CG-betaOffsetsCrossPri0) corresponding to the CG-UCI-OnPUSCH information element for the LP HARQ-ACK multiplexed on the HP CG PUSCH, the betaOffsets parameter (CG-betaOffsetsCrossPri1) corresponding to the CG-UCI-OnPUSCH information element for the HP HARQ-ACK multiplexed on the LP CG PUSCH, the betaOffsets parameter (for example, betaOffsetsCrossPri0-r17) for the LP HARQ-ACK multiplexed on the HP PUSCH (CG PUSCH), the betaOffsets parameter (for example, betaOffsetsCrossPri1-r17) for the HP HARQ-ACK multiplexed on the LP PUSCH (CG PUSCH), the beta offsets information element (BetaOffsetsCrossPri0 IE) for the LP HARQ-ACK multiplexed on the HP PUSCH (CG PUSCH), and the beta offsets information element (BetaOffsetsCrossPri1 IE) for the HP HARQ-ACK multiplexed on the LP PUSCH (CG PUSCH)).
- New RRC parameters for the UCI on 2 CW PUSCH (for example, the CG-UCI-OnPUSCH information element (CG-UCI-OnPUSCH-2codeword-r18 IE) for the CG PUSCH, the betaOffsets parameter (betaOffsets-2codeword-r18), and the BetaOffsets information element (BetaOffsets-2codeword-r18 IE)) are interpreted as corresponding new RRC parameters related to multiplexing of different priorities for the UCI on 2 CW PUSCH (for example, the betaOffsets parameter (for example, CG-betaOffsetsCrossPri0-2codeword-r18) corresponding to the CG-UCI-OnPUSCH information element for the LP HARQ-ACK multiplexed on the HP CG PUSCH, the betaOffsets parameter (for example, CG-betaOffsetsCrossPri1-2codeword-r18) corresponding to the CG-UCI-OnPUSCH information element for the HP HARQ-ACK multiplexed on the LP PUSCH (CG PUSCH), the betaOffsets parameter (for example, betaOffsetsCrossPri0-2codeword-r18) for the LP HARQ-ACK multiplexed on the HP PUSCH (CG PUSCH), the betaOffsets parameter (for example, betaOffsetsCrossPri1-2codeword-r18) for the HP HARQ-ACK multiplexed on the LP PUSCH (CG PUSCH), the beta offsets information element (for example, BetaOffsetsCrossPri0-2codeword-r18 IE) for the LP HARQ-ACK multiplexed on the HP PUSCH (CG PUSCH), and the beta offsets information element (for example, BetaOffsetsCrossPri1-2codeword-r18 IE) for the HP HARQ-ACK multiplexed on the LP PUSCH (CG PUSCH)).

Note that, in the fourth embodiment, when the UE is configured with an RRC parameter related to enabling (application) of enhancement of the configuration of the beta offset related to multiplexing of different priorities, the UE may use an RRC parameter related to the beta offset of existing Rel. 15/16 as the configuration for the HP (LP) HARQ-ACK multiplexed on the LP (HP) PUSCH, and use an RRC parameter related to the beta offset to be newly defined as the configuration for the LP (HP) HARQ-ACK multiplexed on the HP (LP) PUSCH.

In the fourth embodiment, when the UE is configured with the RRC parameter related to enabling (application) of enhancement of the configuration of the beta offset related to multiplexing of different priorities, the UE may ignore the RRC parameter related to the beta offset of existing Rel. 15/16 (even if it is configured). When the UE is configured with the RRC parameter related to enabling (application) of enhancement of the configuration of the beta offset related to multiplexing of different priorities, the UE may be configured with two sets of RRC parameters related to the beta offset. In this case, the UE may use an RRC parameter related to the beta offset of a first set of the two sets as the configuration for the HP (LP) HARQ-ACK multiplexed on the LP (HP) PUSCH, and use an RRC parameter related to the beta offset of a second set of the two sets as the configuration for the LP (HP) HARQ-ACK multiplexed on the HP (LP) PUSCH.

In the fourth embodiment, when the UE is not configured with the RRC parameter related to enabling (application) of enhancement of the configuration of the beta offset related to multiplexing of different priorities, the UE may use the RRC parameter related to the beta offset of existing Rel. 15/16 for determination of the beta offset.

According to the fourth embodiment described above, even in cases of multiplexing of different priorities (for example, a case of multiplexing the HP HARQ-ACK on the LP PUSCH and a case of multiplexing the LP HARQ-ACK on the HP PUSCH), the UE can appropriately determine the beta offset for the 2 CW PUSCH.

### <Supplements>

In the embodiments described above, the beta offset indicator field in DCI need not be enhanced, but interpretations of bit values may be different from existing interpretations. When the DCI schedules (indicates/implies) the 2CW PUSCH, the configuration for the 2CW PUSCH may be indicated using the beta offset indicator field. For example, beta offset indicator field = "01" included in the DCI for scheduling the 2CW PUSCH may mean (the beta offsets information element corresponding to) a second offset index provided for the 2CW PUSCH by RRC.

Note that enhancement need not be performed, but interpretations of bit values may be different from existing interpretations. When the DCI schedules the 2CW PUSCH and different beta offsets are used for the first CW and the second CW, the configuration for the first CW and the configuration for the second CW may be indicated using the beta offset indicator field. For example, beta offset indicator field = "01" included in the DCI for scheduling the 2CW PUSCH may mean (the beta offsets information element for the first CW and the beta offsets information element for the second CW corresponding to) a second offset index provided by RRC.

When the DCI schedules (indicates/implies) the 1CW PUSCH, the configuration for the 1CW PUSCH may be indicated using the beta offset indicator field. For example, beta offset indicator field = "01" included in the DCI for scheduling the 1CW PUSCH may mean (the beta offsets information element corresponding to) a second offset index provided for the 1CW PUSCH by RRC.

Note that, in the embodiments described above, regarding the UCI on 2 CW PUSCH, the UCI may be multiplexed on only one TB (for example, only a TB corresponding to a lower TB index), the UCI may be divided into two parts and each of them may be multiplexed on a different TB, or the UCI may be copied and the same UCI may be multiplexed on each TB. Regarding the UCI on 2 CW PUSCH, in a case where the UCI is multiplexed on only one TB, the UE may be configured with the configuration (the information elements, the parameters, and the like described in the embodiments described above) related to the beta offset regarding the TB, and the configuration related to the beta offset regarding other TBs need not be configured.

Note that at least one of the embodiments described above may be applied only to the UE that has reported a specific UE capability or that supports the specific UE capability.

The specific UE capability may indicate at least one of the following:
- Whether or not to support different configurations for the UCI on 1 CW PUSCH and the UCI on 2 CW PUSCH regarding the PUSCH scheduled using a DCI format other than DCI format 0_2;
- Whether or not to support different configurations for the UCI on 1 CW PUSCH and the UCI on 2 CW PUSCH regarding the PUSCH scheduled using a DCI format other than DCI format 0_2;
- Whether or not to support different configurations for the UCI on 1 CW PUSCH and the UCI on 2 CW PUSCH regarding the PUSCH scheduled using any DCI format;
- Whether or not to support different configurations for the UCI on 1 CW PUSCH and the UCI on 2 CW PUSCH regarding the CG PUSCH;
- Whether or not to support different configurations for the CG-UCI on 1 CW PUSCH and the CG-UCI on 2 CW PUSCH regarding the CG PUSCH;
- Whether or not to support different configurations for the CG-UCI on 1 CW PUSCH and the CG-UCI on 2 CW PUSCH regarding cases of multiplexing of different priorities (for example, a case of multiplexing the HP HARQ-ACK on the LP PUSCH and a case of multiplexing the LP HARQ-ACK on the HP PUSCH);
- Whether or not to support the 2 CW PUSCH.

The specific UE capability may be a capability applied to all of the frequencies (in common regardless of a frequency), may be a capability for each frequency (for example, a cell, a band, a BWP), may be a capability for each frequency range (for example, FR1, FR2, FR3, FR4, FR5), or may be a capability for each subcarrier spacing.

The specific UE capability may be a capability applied to all of the duplex methods (in common regardless of a duplex method), or may be a capability for each duplex method (for example, time division duplex (TDD), frequency division duplex (FDD)).

At least one of the embodiments described above may be applied when the UE is configured with specific information related to the embodiments described above using higher layer signaling. For example, the specific information may be configuration information for the UCI on 2 CW PUSCH, any RRC parameter for a specific release (for example, Rel. 18), or the like.

When the UE does not support at least one of the specific UE capabilities or is not configured with the specific information, for example, the UE may apply Rel-15/16 operation, may assume to apply the same configuration (for example, default configuration) to the 1 CW PUSCH and the 2 CW PUSCH, or if a new RRC parameter indicates enabling of an assumption to apply the same configuration to the 1 CW PUSCH and the 2 CW PUSCH, may assume in such a manner.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

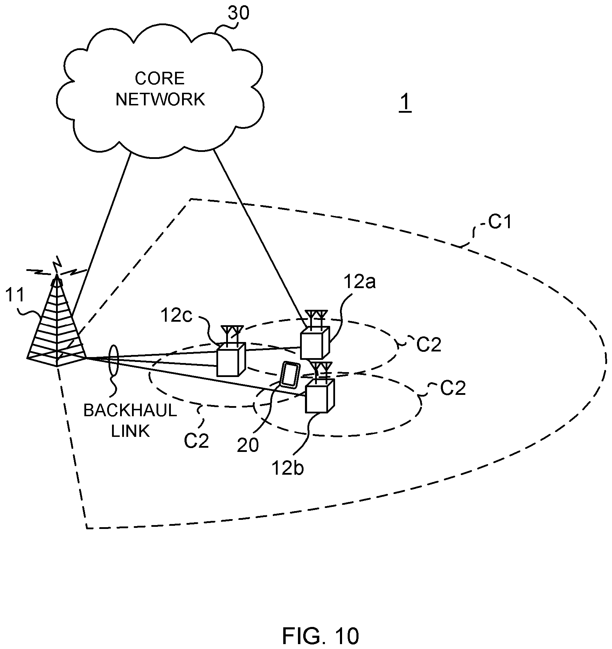

FIG. 10 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, and 5G.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may also be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

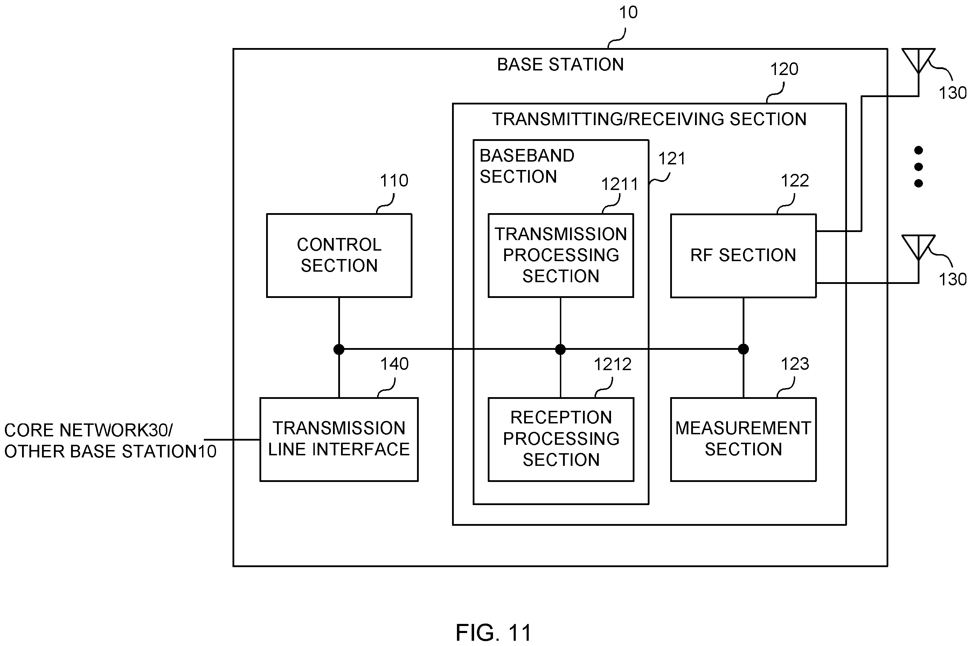

FIG. 11 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

Note that the control section 110 may generate first configuration information (for example, betaOffsets, scaling, UCI-OnPUSCH) related to a beta offset for a physical uplink shared channel for one codeword and second configuration information (for example, betaOffsets-2codeword-r18, scaling-2codeword-r18, UCI-OnPUSCH-2codeword-r18) related to the beta offset for the physical uplink shared channel for two codewords.

The transmitting/receiving section 120 may transmit the first configuration information and the second configuration information to the user terminal 20.

### (User Terminal)

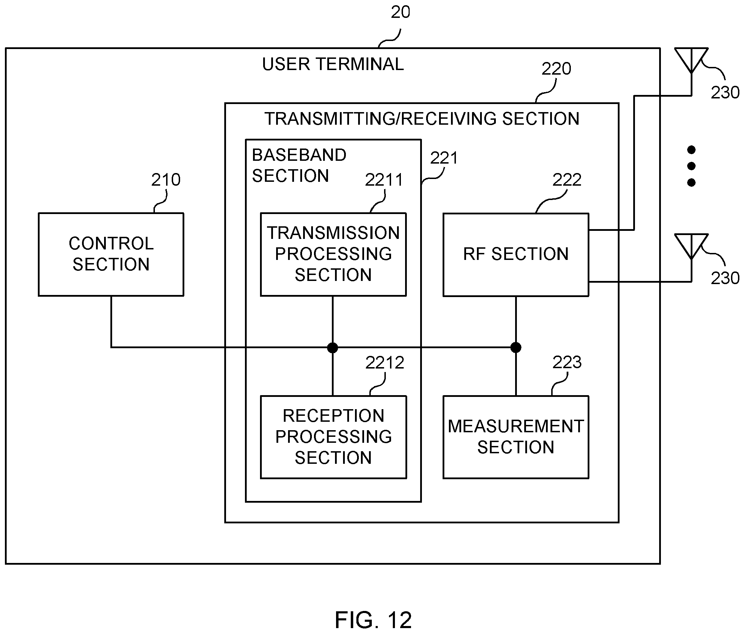

FIG. 12 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive first configuration information (for example, betaOffsets, scaling, UCI-OnPUSCH) related to a beta offset for a physical uplink shared channel for one codeword and second configuration information (for example, betaOffsets-2codeword-r18, scaling-2codeword-r18, UCI-OnPUSCH-2codeword-r18) related to the beta offset for the physical uplink shared channel for two codewords.

The control section 210 may determine the beta offset for transmission of the physical uplink shared channel for the two codewords, based on the second configuration information.

The physical uplink shared channel may be a physical uplink shared channel scheduled using a DCI format other than downlink control information (DCI) format 0_2.

The physical uplink shared channel may be a physical uplink shared channel scheduled using downlink control information (DCI) format 0_2.

The physical uplink shared channel may be a configured grant physical uplink shared channel.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

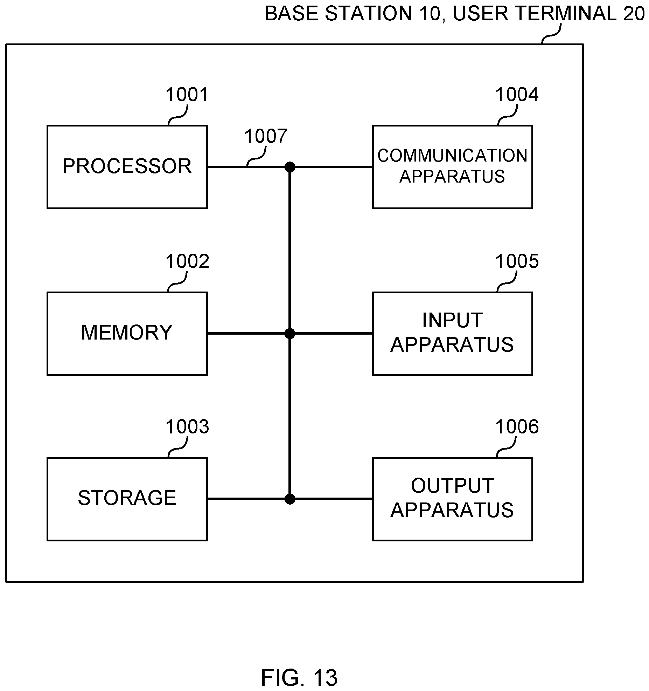

For example, a base station, a user terminal, and so on according to one embodiment of the present disclosure may function as a computer that executes the processes of the radio communication method of the present disclosure. FIG. 13 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmission power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

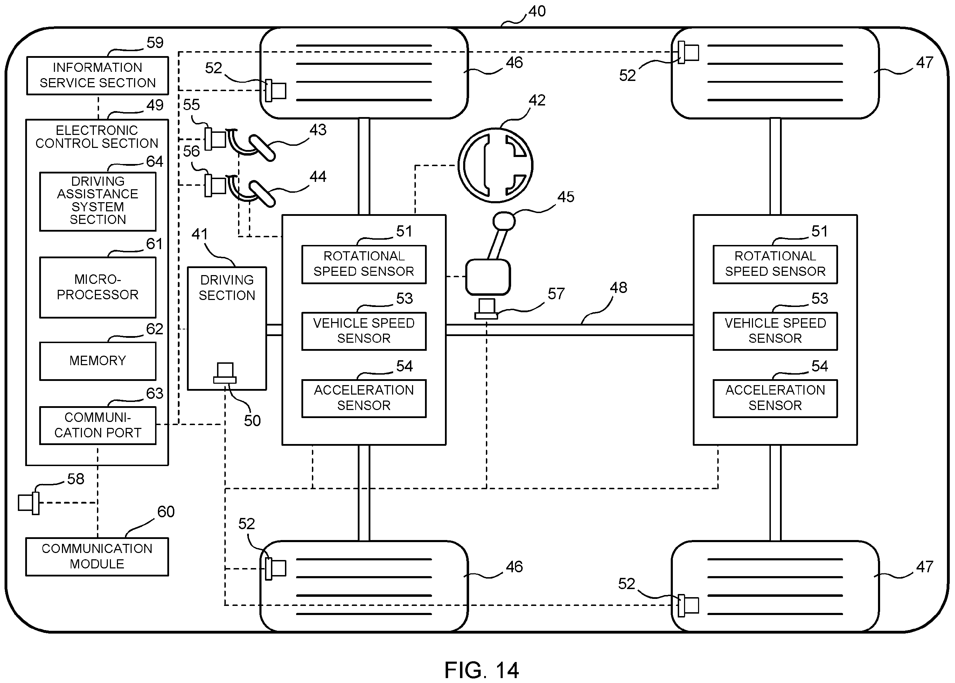

FIG. 14 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives first configuration information related to a beta offset for a physical uplink shared channel for one codeword and second configuration information related to the beta offset for the physical uplink shared channel for two codewords; and
a control section that determines the beta offset for transmission of the physical uplink shared channel for the two codewords, based on the second configuration information.

2. The terminal according to claim 1, wherein
the physical uplink shared channel is a physical uplink shared channel scheduled using a DCI format other than downlink control information (DCI) format 0_2.

3. The terminal according to claim 1, wherein
the physical uplink shared channel is a physical uplink shared channel scheduled using downlink control information (DCI) format 0_2.

4. The terminal according to claim 1, wherein
the physical uplink shared channel is a configured grant physical uplink shared channel.

5. A radio communication method for a terminal, comprising:
receiving first configuration information related to a beta offset for a physical uplink shared channel for one codeword and second configuration information related to the beta offset for the physical uplink shared channel for two codewords; and
determining the beta offset for transmission of the physical uplink shared channel for the two codewords, based on the second configuration information.

6. A base station comprising:
a control section that generates first configuration information related to a beta offset for a physical uplink shared channel for one codeword and second configuration information related to the beta offset for the physical uplink shared channel for two codewords; and
a transmitting section that transmits the first configuration information and the second configuration information.
